## Europäisches Patentamt

## European Patent Office

## Office européen des brevets

(11) Publication number: **0 294 153**
**B1**

(12) # EUROPEAN PATENT SPECIFICATION

(45) Date of publication of the patent specification:
**04.04.90**

(51) Int. Cl.⁴: **B60C 9/28**, B60C 9/20

(21) Application number: **88304949.6**

(22) Date of filing: **31.05.88**

(54) Motorcycle tyres.

(30) Priority: **05.06.87 JP 141982/87**

(43) Date of publication of application:
**07.12.88 Bulletin 88/49**

(45) Publication of the grant of the patent:
**04.04.90 Bulletin 90/14**

(84) Designated Contracting States:
**DE FR IT**

(56) References cited:
**EP-A- 0 157 617**
**GB-A- 2 121 736**
**US-A- 4 454 903**
**US-A- 4 589 461**

(73) Proprietor: **SUMITOMO RUBBER INDUSTRIES LIMITED,**
**No. 1-1, Tsutsui-cho 1-chome, Chuo-ku Kobe-shi**
**Hyogo 651(JP)**

(72) Inventor: **Noma, Hiroyuki, 16-3, Suzurandai**
**Kitamachi 3-chome, Kira-ku Kobe-shi Hyogo-ken(JP)**

(74) Representative: **Stewart, Charles Geoffrey, SP TYRES**
**UK LIMITED Tyre Technical Division, Fort Dunlop**
**Erdington Birmingham B24 9QT(GB)**

ACTORUM AG

## Description

The present invention relates to a motor-cycle tyre and particularly to a motor-cycle radial tyre which has good high-speed steering stability and in which ply-separation in the breaker edge regions is reduced.

Recently, opportunities to run vehicles at high speed have increased due to more paved roads, and good characteristics for high speed running are now required for motor-cycle tyres.

The tyres which have been used on motor-cycles are cross-ply tyres in which the carcass ply cords are arranged at an angle of 30 to 60 degrees to the tyre circumferential direction with the cords of each ply crossing with those of the next ply. The reason is that motor-cycles basically differ from four-wheeled vehicles such as a passenger car in behaviour especially when turning. In order to turn, the motor-cycle has to be inclined or banked (to give a large camber angle), by which a force (camber thrust) parallel to the road surface is produced in the same direction as that of the inclination thereof, and which force acts on the tyre and balances the centrifugal force thereon. Thus motor-cycle tyres are required to have characteristics capable of producing a steady camber thrust. Accordingly, the carcass of the above-mentioned cross-ply construction has been used for motor-cycle tyres to increase the lateral rigidity and to maintain the camber thrust. Carcass of a radial construction with poor lateral rigidity have scarcely been used because of the above mentioned requirements.

Such cross-ply tyres, however, have drawbacks in that lateral vibrations (of a weave mode) due to a relation between the lateral rigidity of a tyre and its cornering power, are liable to occur during high speed straight running and in general, wear resistance is poor. Accordingly, measures for increasing the rigidity of a tyre, for example, to increase the number of plies in the carcass, to vary the angles of the carcass ply cords or the like, have been taken as countermeasures. It is, however, very difficult to completely remove the drawbacks thereof as far as cross-ply construction is employed.

Recently, therefore, it has been proposed to use radial ply tyres to solve the above mentioned drawbacks of the conventional cross-ply construction. However, it is known that when the general radial-ply construction is applied for motor-cycle tyres, separation of the breaker edge portions from the surrounding rubber frequently occurs which is explained as follows:-

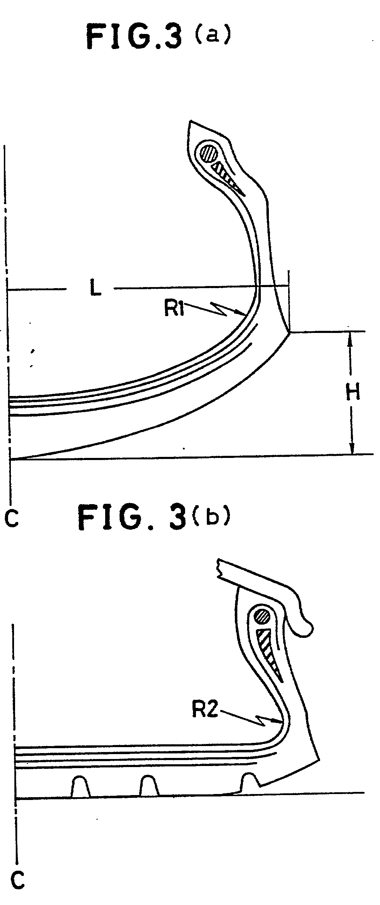

In the motor-cycle tyre shown in Fig.3 (a), the radius of curvature of the tread is small, that is, the camber value H/L is large, and the breaker comprises at least one ply of cords extending across the whole width of the tread. Accordingly, the tension of the breaker cords in the tread centre region is different to that in the tread edge regions. As a result, stress is concentrated in the breaker edges.

Further, the tread is subjected to repeating deformation from the free state of Fig.3 (a) to the ground contacting deflected state of Fig.3 (b) and vice versa. When the tread is deformed into the ground contacting area the radius is decreased to R2 (Fig/3(b) from R1 (Fig.3(a). As a result, shear stress is generated on the breaker edges because they are located in such regions.

Furthermore, high elasticity modulus cords such as steel cords are generally used as breaker cords. The difference in rigidity from the surrounding material which is rubber further accelerates the ply-separation in the breaker edges.

From EP-A 0 157 617 there is known a tyre according to the preamble of claim 1.

It is therefore, an object of the present invention to provide a radial tyre for motor-cycles, in which the above-mentioned problems are solved and ply-separation in the edges of the breaker of the radial tyre is lessened. and which is excellent in steering stability in high speed running.

According to the present invention a motor-cycle tyre is provided comprising a pair of bead cores, a carcass ply of radially arranged organic cords, the edges of which are turned up around the bead cores, a tread and a breaker disposed between the carcass and the tread, the breaker comprising a main reinforcing layer and an auxiliary reinforcing layer, the main reinforcing layer being organic cords and the width thereof being substantially equal to the width of the tread, characterised in that the auxiliary reinforcing layer comprises cords with a modulus of tensile elasticity of 3000 to 25000 kp/.mm$^2$, and the width thereof is in the range of 10 to 70% of the maximum width of the tyre.

Some embodiments of the present invention will be described,by way of example only,with reference to the accompanying drawings, in which:

Fig.1 and 2 are part sectional views each showing an embodiment of the present invention.

Figs. 3(a) and 3(b) are schematic part sectional views showing the unloaded state and ground contacting state of a tyre, respectively; and

Fig.4. is a diagrammatic view showing the breaker.

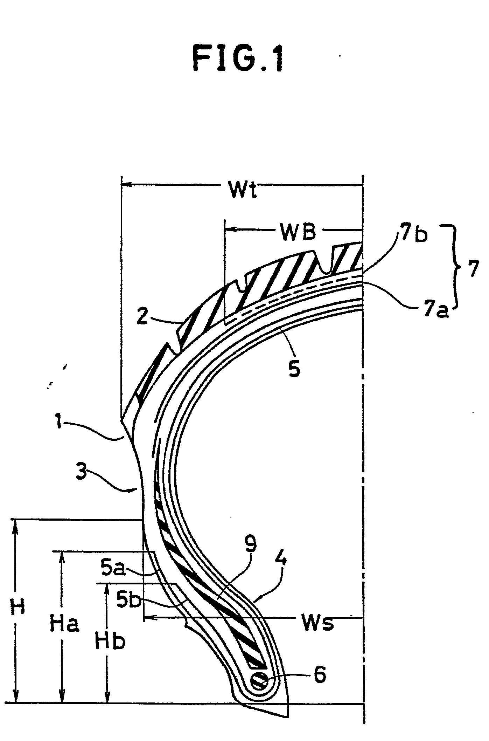

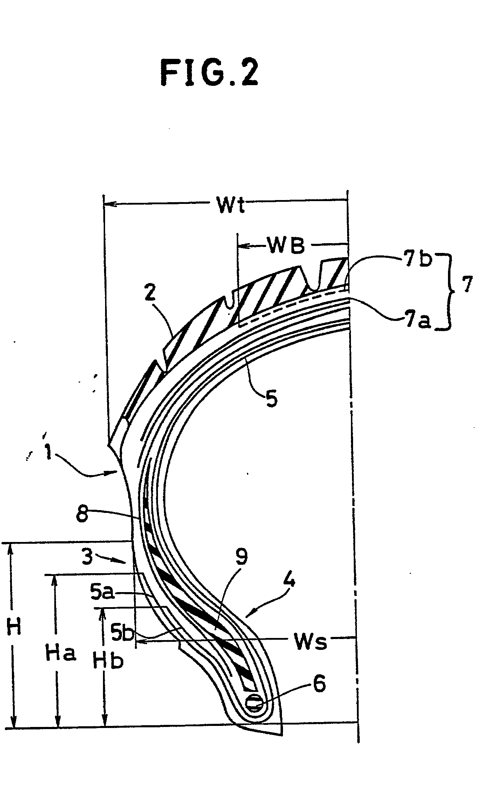

In Figs.1 and 2 a tyre 1 has a tread region 2, sidewall regions 3 extending radially inwardly from the edges of the tread region 2 and bead regions 4 located radially inward of the sidewalls 3. The tyre also comprises a pair of bead cores 6 provided one in each bead region 4, a carcass 5 extending between the bead region 4 and a pair of bead apexes 9 disposed in the bead regions 4.

The tread 2 extends from the equatorial plane of the tyre towards each side so that the tread width Wt exceeds the maximum width Ws of the tyre section sidewall regions 3 so that when the tyre is tilted, camber thrust is generated. Thus, in these embodiments, the maximum width of the tyre means the above-mentioned tread width Wt.

The tread profile is substantially in parallel with the contour of the carcass 5.

The carcass 5 is composed of at least one ply of cords, in these examples two plies of cords, and the edges of each ply are turned up around the bead cores 6 from the inside to the outside. Each turnup is terminated in a region including the bead region 4 and the sidewall region 3.

In a preferred example, the outer carcass ply turnup 5a is extended beyond the edge of the inner carcass ply turnup 5b so as to completely cover the edge of the inner turnup 5b, whereby stress concentration on the edge of the carcass ply turnup 5b is mitigated.

Furthermore, to reinforce the sidewall regions 3, the heights Hb and Ha of the axially inner turnup 5b and the axially outer turnup 5a from the bead base, are respectively in a range of 55 to 65 % and a range of 70 to 100 % respectively of the height H of the above-mentioned maximum width (Ws) point in the sidewall part.

The cords of the carcass are arranged at an angle of 0 to 20 degrees to the radial direction of the tyre. If the angle is more than 20 degrees, the tyre cannot display the excellent high speed characteristics typical of radial tyres.

Furthermore, the cords of the carcass plies are made of organic fibres such as polyester or rayon, having a modulus of tensile elasticity of less than 1500 kp/.mm² and more preferably less than 500 kp/.mm², and the cords are arranged parallel each other and embedded in rubber. For example, when the carcass cords are of nylon having a modulus of tensile elasticity of less than 500 kp/.mm² and the thickness is 1000 to 2000 denier, the modulus at 300% elongation of the above-mentioned rubber is in the range of 80 to 230 kp/.cm² and the cord density is in the range of 35 to 60 cords per 5 cm width.

In the examples shown in the drawings, the edges of the carcass plies are turned up outwardly around the bead cores as described above. However, the carcass can employ (a) a structure in which the edges of the carcass ply are turned up around the bead cores from the outside to the inside thereof or (b) a combination structure of the former two.

The tyre of the invention is provided with a breaker 7 between the carcass 5 and the tread rubber.

The breaker 7 comprises a wide main reinforcing layer 7a and a narrow auxiliary reinforcing layer 7b.

In the breaker 7 of Figs.1 and 2, the auxiliary reinforcing layer 7b is located radially outside the main reinforcing layer 7a, but the reversed arrangement may be employed.

The main reinforcing layer 7a comprises a plurality of plies of cords including at least one ply which has a width substantially equal to the tread width Wt, whereby the main reinforcing layer as a whole has substantially the same width as that of the tread.

The cords of the main reinforcing layer 7a are arranged at an angle of 5 to 30 degrees, and more preferably 10 to 25 degrees to the circumferential direction of tyre. If the cord angle is too small, the tread stiffness is increased, and as a result impacts caused by pebbles on the road and roughness of the road are felt strongly by the rider, and the running stability as well as the ride comfort of the motor-cycle is impaired. On the other hand too large an angle impairs the steering stability at the time of high speed running.

The ply cords of the main reinforcing layer 7a are made of organic fibres having a modulus of tensile elasticity of less than 1500 kp/.mm² similar to the cords used for the carcass 5, and embedded in rubber, Especially it is preferred to use nylon fibre cords, and more preferably, for example, 1000-2000 denier cords embedded in rubber having a modulus at 300% elongation of 100 to 240kp/. cm² with a density of 35 to 55 cords/5 cm.

Preferably, the cords of the main reinforcing layer 7a are made of the same material as that of the carcass cords to make their modulae the same, so that stress concentration on the edges of the breaker is further alleviated.

The auxiliary layer 7b comprises at least one ply of cords, for example aromatic polyamide fibre cords, steel cords, glass fibre cords, carbon fibre cords or the like, having a modulus of tensile elasticity of 3000 to 25000 kp/.mm². The cords in the or each ply are arranged at an angle less than 30 degrees to the circumferential direction of tyre.

The auxiliary reinforcing layer 7b has a width WB of 10 to 70 % of the tread width Wt. If the width is less than 10%, the hoop effect and the deformation suppressing ability become insufficient. On the other hand, if it is more than 70%, each edge of the auxiliary layer becomes located in the most flexible zone, and therefore stress concentrates thereon. In addition, when the crown part of the tyre contacts with ground, the auxiliary layer 7b is deformed flatly, but less strain is generated in the edge regions thereof because the layer is narrow in width. Accordingly, ply separation in the above mentioned edge regions is effectively suppressed.

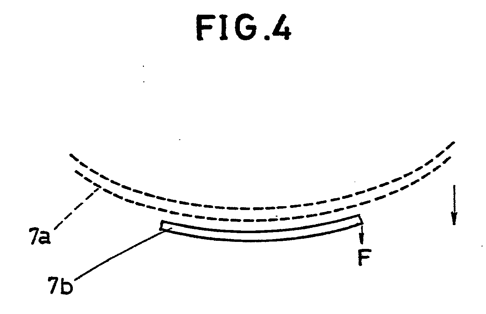

The cords of the auxiliary reinforcing layer are of a high modulus of elasticity. Accordingly, the hoop effect thereof is improved, deformation (F-direction deformation) shown in the diagrammatic drawing of Fig.4 showing the breaker, that is, the flattening of the breaker 7 when the tyre contacts with ground is suppressed, and the deformation of the tyre shoulder in the free and deflected states is mitigated so that the ratio R2/R1 approximates to 1. As a result, the shear strain in each edge region of the breaker is further mitigated.

The bead apex 9 is made of hard rubber having a JIS-A hardness of 65 to 95 degrees, and disposed between the carcass main ply 5 and the carcass turnups(5a, 5b). The bead apex 9 extends decreasingly in thickness from the bead core 6 towards the sidewall regions 3 and preferably to a zone overlapping the edge parts of the main reinforcing layer 7a, whereby the lateral stiffness of a region from the bead region 4 to the sidewall region 3 is increased.

The tyre of Fig.2 is provided with a further reinforcing layer 8 radially outside the carcass 5.

The reinforcing layer 8 extends from one bead region 4 to the other bead region 4, and each edge thereof is not turned up around the bead core 6, but terminates a point above the bead core 6.

Preferably, each edge of the reinforcing layer 8 overlaps with the carcass turnups 5a and 5b in the bead region 4 to lessen stress concentration thereon.

Furthermore, each edge of the reinforcing layer 8 is preferably disposed between the bead apex 9 and the carcass turnup 5a, 5b, but it can be disposed between the bead apex (9) and the main carcass 5.

The reinforcing layer 8 is composed of textile cords made of organic fibre cords such as nylon, polyester, rayon, aromatic polyamide fibre cords, or steel wire cords.

The cords of the reinforcing layer 8 intersect the carcass cords at a certain fixed angle to reinforce the sidewall region 3. For improvement in cornering characteristics without impairing ride comfort, it is necessary to increase the lateral spring coefficient of the sidewall regions 3 without increasing the vertical spring coefficient thereof. Therefore, it is necessary to arrange the cords at an angle of 45 to 85 degrees, more preferably 60 to 80 degrees to the circumferential direction.

As working examples of the present invention, 140/80-18 rear wheel tyres with the structure shown in Fig.1 and tyres with a structure partly modified therefrom, were manufactured by way of trial. For comparison conventional cross ply tyres and conventional radial tyres were made reference. The detailed specifications thereof are shown in Table 1. The tyres were tested, and the results are shown in Table 2, in which:

The camber thrust of each is indicated by a relative value based on the assumption that the measurement for the cross ply tyre (Reference 1) is regarded as 100. The larger the value is, the better.

The standing wave generating speed of each tyre was measured by visually observed while the running speed was increased from 170 km/h every 30 minutes by 10 km/h steps

The natural vibration generating speed was evaluated in a feel test on the highway road by a skilled test rider

The test for High speed durability was performed according to test method B in the JATMA Motor Vehicle Tyre Safety Standard. That is, running speed is increased from 170 km/h to 200 km/h every 10 minutes by 10 km/h steps and then from 200 km/h every 20 minutes by 10 km/h steps, and the speed at which damage in the breaker edge regions (separation breaker and carcass) occurs is measured.

The motor-cycle used in field testing was a HONDA MJ4 provided with a 120/180V16 cross ply tyre on the front wheel, and each test tyre of Table 1 was mounted on the rear wheel, and then the performance thereof was evaluated.

Table 1

| | | Ex. 1 | Ex. 2 | Ex. 3 | Ex. 4 | Ex. 5 | Ref. 1 | Ref. 2 | Ref. 3 |
|---|---|---|---|---|---|---|---|---|---|
| (1) | CARCASS | | | | | | | | |
| | Construction | Radial | Radial | Radial | Radial | Radial | Cross-ply | Radial | Radial |
| | Ply number | 2 | 2 | 2 | 2 | 1 | 4 | 2 | 2 |
| | Cord angle (deg.) (to the tyre circumferential direction) | 88 | 88 | 88 | 88 | 90 | 34 | 88 | 88 |
| | Material of fiber | Nylon | Nylon | Nylon | Nylon | Nylon | Nylon | Nylon | Nylon |
| | Denier | 2/1260d | 2/1260d | 2/1260d | 2/1260d | 2/1890d | 2/1260d | 2/1260d | 2/1260d |
| (2) | BREAKER | | | | | *2 | | | |
| (a) | Main reinforcing layer | | | | | | | | |
| | Width (mm) | 160/146 | 160/146 | 160/146 | 160/146 | 160 | | 160/146 | 160/146 |
| | Ply number | 2 | 2 | 2 | 2 | 1 | | 2 | 2 |
| | Material of fibers | Nylon | Nylon | Nylon | Nylon | Nylon | | Nylon | Nylon |
| | Denier | 2/1890d | 2/1890d | 2/1890d | 2/1890d | 2/1890d | | 2/1890d | 2/1890d |
| | Cord angle (deg.) (1st ply, 2nd ply) (to the tyre circumferential direction) | 22, −22 | 22, −22 | 22, −22 | 22, −22 | 22 | | 22, −22 | 22, −22 |
| (b) | Auxiliary layer | | | | | | | | |
| | With/Tyre max. width (%) | 50 | 50 | 60 | 40 | 30 | | | 50 |
| | Material of cords | steel | aramid | steel | steel | steel | | | polyester |
| | Cord angle (deg.) | 0 | 5 | 10 | 10 | −22 | | | 22 |
| (3) | REINFORCING LAYER (8) | | | | | | | | |
| | Material of fibers | Nylon | | | | Nylon | | | Nylon |
| | Denier | 2/1260d | | | | 2/1260d | | | 2/1260d |
| | Angle (deg.) | 75 | | | | 75 | | | 75 |
| (4) | BEAD APEX | | | | | | | | |
| | JIS hardness (deg.) | 95 | 95 | 70 | 95 | 95 | | | 95 |
| | Upper end height (mm) (from bead base) | 70 | 70 | 40 | 70 | 40 | | | 70 |

*1: Camber value of each tyre is 0.30.
*2: A fold construction wherein each edge of the cord ply is folded back.

EP 0 294 153 B1

Table 2

| | Ex. 1 | Ex. 2 | Ex. 3 | Ex. 4 | Ex. 5 | Ref. 1 | Ref. 2 | Ref. 3 |
|---|---|---|---|---|---|---|---|---|
| DRUM TEST *1 | | | | | | | | |
| Camber thrust | 98 | 93 | 90 | 93 | 92 | 100 | 85 | 93 |
| Standing-wave generating speed (km/h) | 250 | 245 | 230 | 225 | 200 | 160 | 170 | 200 |
| FIELD TEST | | | | | | | | |
| Vibration-naturally-generating speed (km/h) | 220 | 220 | 200 | 200 | 190 | 170 | 180 | 180 |
| Vibration-damping property after disturbance | damped | damped | damped | undamped | damped | damped | damped | damped |
| Durability | 275 | 260 | 280 | 250 | 250 | | 190 | 200 |
| Wear resistance *2 | 45 | 47 | 50 | 60 | 62 | 100 | 95 | 90 |

*1: Test condition: drum diameter = 60 in., tyre load = 230 kg, inner pressure = 2.9 kg/sq.cm.
*2: Total wear at the tread center of each tyre, which is indicated by a relative value based on the assumption that the total wear of Ref. 1 is 100. The smaller the value, the better the wear resistance.

EP 0 294 153 B1

As described above, motor-cycle tyre of the present invention was provided with a carcass of a radial structure. Accordingly, the good high-speed durability thereof which originates in a radial structure was maintained, and the critical speed as to generation of standing wave was further increased. Moreover, the carcass plies and the main reinforcing layer of the breaker was made of organic fibre cords, preferably nylon, cords, and auxiliary layer was made of highly elastic cords, so that ply separation in the breaker edge regions was prevented. Furthermore, the breaker, the carcass ply turnup, and the reinforcing layer were arranged in a particular manner, so that the lateral stiffness of the tyre was increased, and a drawback of the conventional radial tyre was eliminated. As a result, the so called "Wobbling phenomenon" was effectively prevented, and camber thrust was increased whilst providing the rider with stable cornering.

The present invention is preferably applied for motor-cycle tyres of which the camber value is more than 0.1, more preferably more than 0.2, wherein the camber value is, as shown in Fig.3 (a) and (b), defined as the ratio (HL) of the vertical distance H between the tread edge and the tread centre to the distance L of the tread edge from the equatorial plane of the tyre.

## Claims

1. A motor-cycle tyre comprising a pair cf bead cores (6), a carcass ply (5) of radially arranged organic cords, the edges of which are turned up around the bead cores (6), a tread (2) and a breaker (7) disposed between the carcass (5) and the tread, the breaker comprising a main reinforcing layer (7a) and a auxiliary reinforcing layer (7b), the main reinforcing layer (7a) being organic cords, and the width thereof being substantially equal to the width (Wt) of the tread (2), characterised in that the auxiliary reinforcing layer (7b) comprises cords with a modulus of tensile elasticity of 3000 to 25000 kp/.mm$^2$, and the width (WB) thereof being in the range of 10 to 70% of the maximum width (Wt) of the tyre.

2. A tyre according to claim 1 characterised in that the cords of the auxiliary reinforcing layer (7b) are at an angle of less than 30 degrees to the circumferential direction of the tyre.

3. A tyre according to claims 1 or 2 characterised by the cords of the auxiliary reinforcing layer (7b) being steel cords, glass fibre cords, or polyamide fibre cords.

4. A tyre according to any one of claims 1 to 3 characterised in that the cords of the main reinforcing layer (7a) have a modulus of tensile elasticity of less than 500 kp/.mm$^2$

5. A tyre according to claim 4 characterised by the cords of the main reinforcing layer (7a) are embedded in rubber having a modulus at 300% elongation in the range of 100 to 240 kp/.cm$^2$

6. A tyre according to any one of claims 1 to 5 wherein the cords of the main reinforcing layer (7a) are arranged at an angle in the range of 5 to 30 degrees to the circumferential direction of the tyre.

7. A tyre according to any one of claims 1 to 6 characterised by the cords of the carcass (5) being of the same material as the cords of the main reinforcing layer (7a).

8. A tyre according to any one of claims 1 to 7 wherein the material of the main reinforcing layer (7a) comprises nylon cords.

## Patentansprüche

1. Motorradreifen mit einem Paar Wulstkerne (6), einer Karkasslage (5) mit radial angeordneten organischen Korden, deren Kanten um die Wulstkerne (6) zurückgeschlagen sind, einer Lauffläche (2) und einem zwischen der Karkasse (5) und der Lauffläche angeordneten Gürtel (7), wobei der Gürtel eine Haupt-Verstärkungsschicht (7a) und eine Hilfs-Verstärkungsschicht (7b) umfaßt, die Haupt-Verstärkungsschicht (7a) aus organischen Korden besteht und ihre Breite im wesentlichen gleich der Breite (Wt) der Lauffläche (2) ist, dadurch gekennzeichnet, daß die Hilfs-Verstärkungsschicht (7b) Korde mit einem Zugelastizitäts-Modul von 3000 bis 25 000 kp/mm$^2$ umfaßt und ihre Breite (WB) im Bereich von 10 bis 70% der Maximalbreite (Wt) des Reifens liegt.

2. Reifen nach Anspruch 1, dadurch gekennzeichnet, daß die Korde der Hilfs-Verstärkungsschicht (7b) in einem Winkel von weniger als 30 Grad zur Umfangsrichtung des Reifens angeordnet sind.

3. Reifen nach Anspruch 1 oder 2, dadurch gekennzeichnet, daß die Korde der Hilfs-Verstärkungsschicht (7b) Stahlkorde, Glasfaserkorde oder Polyamidfaserkorde sind.

4. Reifen nach einem der Ansprüche 1 bis 3, dadurch gekennzeichnet, daß die Korde der Hauptverstärkungsschicht (7a) einen Zugelastizitäts-Modul von weniger als 500 kp/mm$^2$ haben.

5. Reifen nach Anspruch 4, dadurch gekennzeichnet, daß die Korde der Haupt-Verstärkungsschicht (7a) in Gummi mit einem Modul bei 300% Längung im Bereich von 100 bis 240 kp/cm$^2$ eingebettet sind.

6. Reifen nach einem der Ansprüche 1 bis 5, bei dem die Korde der Haupt-Verstärkungsschicht (7a) mit einem Winkel im Bereich von 5 bis 30 Grad zur Umfangsrichtung des Reifens angeordnet sind.

7. Reifen nach einem der Ansprüche 1 bis 6, dadurch gekennzeichnet, daß die Korde der Karkasse aus dem gleichen Material wie die Korde der Haupt-Verstärkungsschicht (7a) bestehen.

8. Reifen nach einem der Ansprüche 1 bis 7, bei dem das Material der Haupt-Verstärkungsschicht (7a) Nylonkorde umfaßt.

**Revendications**

1. Pneumatique pour motocyclette, comprenant deux tringles (6), une nappe (5) de carcasse formée de câblés organiques disposés radialement, les bords de cette nappe étant repliés vers le haut autour des tringles (6), une bande de roulement (2) et une nappe-sommet (7) placée entre la carcasse (5) et la bande de roulement, la nappe-sommet comprenant une couche principale d'armature (7a) et une couche auxiliaire d'armature (7b), la couche principale d'armature (7a) étant formée de câblés organiques et sa largeur étant pratiquement égale à la largeur (Wt) de la bande de roulement (2), caractérisé en ce que la couche auxiliaire d'armature (7b) contient des câblés ayant un module d'élasticité à la traction compris entre 3000 et 25 000 kgp/mm² et sa largeur (WB) est comprise entre 10 et 70% de la largeur maximale (Wt) du pneumatique.

2. Pneumatique selon la revendication 1, caractérisé en ce que les câblés de la couche auxiliaire d'armature (7b) forment un angle inférieur à 30 degrés avec la direction circonférentielle du pneumatique.

3. Pneumatique selon la revendication 1 ou 2, caractérisé en ce que les câblés de la couche auxiliaire d'armature (7b) sont des câblés d'acier, des câblés de fibres de verre ou des câblés de fibres de polyamide.

4. Pneumatique selon l'une quelconque des revendications 1 à 3, caractérisé en ce que les câblés de la couche principale d'armature (7a) ont un module d'élasticité à la traction inférieur à 500 kgp/mm².

5. Pneumatique selon la revendication 4, caractérisé en ce que les câblés de la couche principale d'armature (7a) sont enrobés dans du caoutchouc ayant un module, pour un allongement de 300%, qui est compris entre 100 et 240 kgp/cm².

6. Pneumatique selon l'une quelconque des revendications 1 à 5, dans lequel les câblés de la couche principale d'armature (7a) font un angle compris entre 5 et 30 degrés avec la direction circonférentielle du pneumatique.

7. Pneumatique selon l'une quelconque des revendications 1 à 6, caractérisé en ce que les câblés de la carcasse (5) sont formés du même matériau que les câblés de la couche principale d'armature (7a).

8. Pneumatique selon l'une quelconque des revendications 1 à 7, dans lequel le matériau de la couche principale d'armature (7a) est formé de câblés de «Nylon».

# FIG.1

# FIG.2

EP 0 294 153 B1

# FIG.3 (a)

# FIG. 3 (b)

# FIG.4

7a

7b

F